# EUROPÄISCHE PATENTSCHRIFT

(11) **EP 0 507 903 B1**
(45) Veröffentlichungstag und Bekanntmachung des Hinweises auf die Patenterteilung: **28.05.1997**
(21) Anmeldenummer: 91917734.5
(22) Anmeldetag: 12.10.1991
(51) Int. Cl.: G06K 19/06, G06K 19/067, G06K 19/07, G06K 19/077

(54) **DATENTRÄGER FÜR IDENTIFIKATIONSSYSTEME**
DATA SUBSTRATE FOF IDENTIFICATION SYSTEMS
SUPPORT D'INFORMATIONS POUR SYSTEMES D'IDENTIFICATION

(30) Priorität: 26.10.1990 DE 4034225
(43) Veröffentlichungstag der Anmeldung: 14.10.1992
(73) Patentinhaber: JURISCH, Reinhard, D-99092 Erfurt (DE)
(72) Erfinder: JURISCH, Reinhard, D-99092 Erfurt (DE)
(74) Vertreter: Pfeiffer, Rolf-Gerd
(86) Internationale Anmeldenummer: DE9100803
(87) Internationale Veröffentlichungsnummer: WO9208209

(56) Entgegenhaltungen:
- EP-A- 0 180 380
- WO-A-89/05067
- DE-A- 3 721 822
- FR-A- 2 610 754
- O. Engelmann, O. Ehrmann, J. Simon und H. Reichl, "Develpoment of a Fine Pitch Bumping Process", in Micro System Technologies 90, 1st International Conference on Micro, Electro, Opto, Mechanic Systems and Components, Berlin 10-13 September 1990, Springer-Verlag Berlin, ISBN 3-540-53025-8.

## Beschreibung

Die Erfindung betrifft einen Datenträger für Identifikationssysteme, der vornehmlich in sogenannten Ident-systemen zur Verwendung gelangt, die bevorzugt in vielen Bereichen der Automation bspw. zur selbstständigen Werkzeugoder Palettenerkennung benötigt werden.

Aus dem Stand der Technik sind solche Datenträger an sich bekannt. Die weitverbreitetsten sind die sogenannten Chipkarten (z.B. DE-PS 3.721.822 und EP 79.047), bei denen zur Anbringung der Antennenspulen an separate integrierte Einselschaltungen ein hinreichender Platz zur Verfügung steht. An solche Karten werden keine sehr hohen Anforderungen bzgl. der Übertragungseffektivität, d.h. an den Spannungs - bzw. Leistungsübertragungsfaktor, gestellt.

Eine Lösung, die in DE-PS 3.721.822 beschrieben ist, bei der die Antennenspule zwar klein ausgeführt ist, in dem sie um den Halbleiterchip, außerhalb aktiver Halbleiterbereiche, gelegt wurde, ist technologisch durch gleichzeitige Strukturierung der Leitbahn- und Spulenstrukturen leichter herstellbar, gewährleistet aber keine hohe Übertragungseffektivität, weil die parasitären Kapazitäten und die Schichtwiderstände ein zu hohes Widerstands-Kapazi-tätsprodukt bewirken. Anders sind die Verhältnisse bei Datenträgern, die z.B. zur Werkzeugerkennung, durch kontaktlose induktive Energie- und Signalübertragung mit einer Lese- oder Schreib-/Leseeinheit in Wechselwirkung treten, eingesetzt werden; hier ist eine hohe Übertragungseffektivität erforderlich.
Diese Bauformen sind ausschließlich als hybride Aufbauten erhältlich. Bei ihnen wird eine hohe Güte der Antennenspulen durch gewickelte Spulen, die mit den anderen separaten Bauelementen gebondet verbunden sind, erreicht. Diese Datenträger müssen dann in, in das Werkzeug einzubringende Bohrungen eingesetzt werden. Sowohl der konstruktive Aufbau dieser Datenträger, der eine relativ große Bauform bedingt, als auch die Art ihrer Anbringung im Werkzeug erfordern einen hohen technologischen Aufwand durch die notwendige Verbindung der Einzelkomponenten wie Spule, Logikschaltung, Speicherschaltung und Versorgungsspannungaufbereitung, was letztendlich auch zu ent sprechend teuren Datenträgern führt.

Der Erfindung liegt deshalb die Aufgabe zugrunde, einen Datenträger zu schaffen, der bei einer weitergehenden Miniaturisierung gleichzeitig über die erforderliche Übertragungseffektivität bei möglichst hoher Übertragungsfrequenz verfügt. Weiterhin liegt der Erfindung die Aufgabe zugrunde eine effektive Energieeinkopplung in mikroelektronische Bauelemente zu ermöglichen.

Erfindungsgemäß wird die Aufgabe durch die in den Patentansprüchen aufgeführten Mittel gelöst. Bei der Erfindung sind die Schaltung zum Decodieren, die Speicherschaltung, die Schaltung zur Aufbereitung der Versorgungsspannung für die elektronischen Schaltungen und die Antennenspule(n) auf einem Chip integriert, wodurch die kostenträchtige Montage zwischen den einzelnen Komponenten entfällt, die Störanfälligkeit vermindert und die geometrischen Maße des Datenträgers stark minimiert werden. Durch die erfindungsgemäße Ausgestaltung und Anbringung der Antennenspule(n) gelingt es, eine hohe Spulengüte zu realisieren, die einen hohen Spannungs- bzw. Leistungsübertragungsfaktor bedingt.

Die Erfindung soll nachstehend anhand zweier Ausführungsbeispiele näher erläutert werden.
Dabei zeigt:
- Fig. 1: einen Querschnitt durch einen Datenträger nach Anspruch 1 mit einer auf den oberen Leitbahnbereichen monolithisch aufgebrachten niederohmigen Spule.
- Fig. 2: einen Querschnitt durch einen Datenträger nach Anspruch 1 und 2 mit einer auf einer planarisierten Passivierungsschicht aufgebrachten niederohmigen Spule.

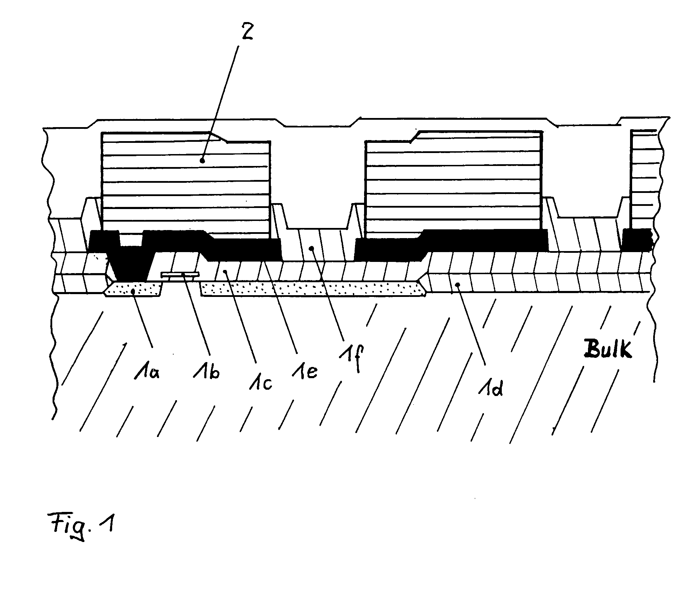

Die Figur 1 zeigt eine Ausführung erfindungsgemäßen Datenträgers, bei dem die integrierte Spule monolithisch und kompatibel zur bisher bekannten Halbleitertechnologie sowie in direktem Kontakt mit der Leitbahn der Halbleiterstruktur ausgeführt ist und im Flächenbereich der aktiven Halbleiterstruktur angeordnet ist.
Auf einem Halbleitersubstrat "Bulk" befindet sich eine Halbleiterstruktur bestehend aus Diffusionsgebieten 1a, Polysiliziumgate 1b, Feldisolation 1d, Zwischenisolation 1c, Metallschichtleitbahn 1e und Passivierungsschicht 1f, die zur erfindungsgemäß integrierten Schaltung des Chips gehört.
Die Metallschicht 1e und die Fenster in der Passivierungsschicht 1f sind entsprechend dieser Ausführung in ihrer lateralen Geometrie, bis auf technologisch notwendige Überlappungen, identisch der gemäß der Erfindung aufgebrachten niederohmigen Spulenwindungen 2 gestaltet. Die niederohmigen Spulenwindungen bestehen dabei aus Metallen hoher elektrischer Leitfähigkeit, sind elektrisch zur Metallschicht 1e kontaktiert und z.B. für eine Übertragungsfrequenz von 2 MHz mit einer Schichtdicke von 8µm, einer Stegbreite von ca. 15µm und einem Abstand von ca. 10 µm dimensioniert ausgeführt.

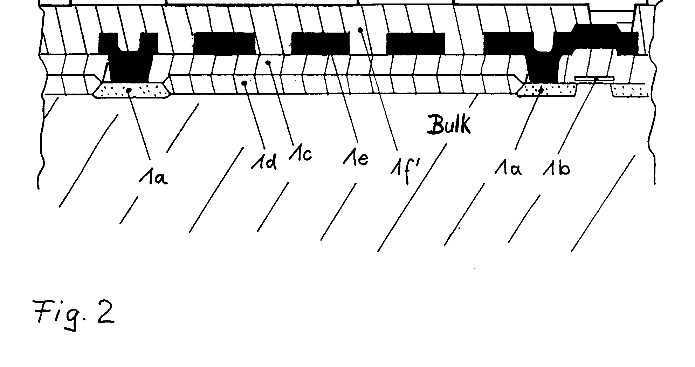

Die Figur 2 zeigt eine Ausführung erfindungsgemäßen Datenträgers, bei dem die integrierte Spule monolithisch und kompatibel zur bisher bekannten Halbleitertechnologie oberhalb der Passivierungschicht 1f der Halbleiterstruktur ausgeführt ist und gemäß der Erfindung im Flächenbereich der aktiven Halbleiterstruktur angeordnet ist.
Das Halbleitersubstrat "Bulk", die Diffusionsgebiete 1a, der Polysiliziumsteg 1b, die Feldisolation 1d und die Passivierungsschicht 1f gehören zur erfindungsgemäß integrierten Schaltung des Chips, wobei die Passivierungsschicht vorteilhafter Weise in ihrer Oberfläche planarisiert ist. Die elektrische Verbindung zwischen Metallisierungsschicht 1e und niederohmiger Spule 2 ist über ein lokales Kontaktfenster hergestellt. Bei gleicher Geometrie der niederohmigen Spulenwindungen wie in Figur 1 werden hierbei aber höhere Frequenzen erzielt.
Im Vergleich zur Figur 1 kann in Figur 2 auch die Metallisierungsschicht 1e beliebig unabhängig von Spule 2 genutzt werden. Im Besonderen kann die Metallisierungsschicht 1e als weitere Spule ausgelegt sein, die unter anderen Bedingungen z.B. Frequenz, Übertragungseffizienz oder Ankopplung an verschiedene Schaltungsfunktionen auf dem Chip arbeitet.
Die Antennenspule kann vertikal und/oder horizontal in mehrere Teilspulenbereiche unterschiedlichen elektrischen widerstands aufgeteilt sein und die einzelnen Spulenbereiche können zumindest teilweise miteinander in elektrischen Kontakt gebracht und mittels verschiedener Anzapfungen mit einem Schaltungsteil zur Gewinnung mindestens der Versorgungsspannung und/oder der Signalmodulation und/oder -demodulation verbunden sein. Der magnetische Wickelsinn der Spulen kann gleich oder entgegengesetzt verlaufen. Ebenso können die Verhältnisse bei Aufteilung einzig der niederohmigen Spule gestaltet sein.

In beiden genannten Ausführungsbeispielen ist zur Herstellung zumindest der niederohmigen Spule die sogenannte Bump-Technologie eingesetzt worden. Dadurch gelingt deren monolithische Integration in einem waferprozeßkompatiblen Verfahrensschritt. Bevorzugt ist die niederohmige Spule im wesentlichen aus Gold bestehend ausgeführt.
In beiden Figuren dient die Endpassivierung der mechanischen Stabilisierung der niederohmigen Spulenwindungen 2 sowie dem Gesamtschutz des integrierten Chips.
In beiden Ausführungsbeispielen weist die niederohmige Spule dabei einen mittleren eingeschriebenen Durchmesser von bspw. 4 mm auf. Die äußere Spulengeometrie kann beliebig gestaltet sein, bevorzugt wird allerdings eine achteckige Geometrie gewählt, die nicht gleichseitig gewählt sein muß, um eine bestmögliche Anpassung an die quadratische bzw. rechteckige Chipgeometrie zu erreichen.

Wenigstens die niederohmige Spule kann nach dem Verfahren der "BUMP"-Technologie gefertigt sein (vgl. O. Engelmann, O. Ehrmann, J. Simon und H. Reichl, "Development of a Fine Pitch Bumping Process", in Micro System Technologies 90, 1st International Conference on Micro, Electro, Opto, Mechanic Systems and Components, Berlin 10-13 September 1990, Springer-Verlag Berlin, ISBN 3-540-53025-8).

## Patentansprüche

1. Datenträger für Identifikationssysteme, der eine oder mehrere integrierte Schaltungen (1) und eine mit diesen verbundene ggf. in mehrere Bereiche aufgeteilte Spulenanordnung (2) enthält, die im wesentlichen direkt oberhalb der aktiven Halbleiterflächen auf dem Chip auf Teilbereichen der obersten Leitbahnstrukturen (1e) aufgebracht sind, wobei zumindest niederohmige Bereiche der Spulenanordnung ausschließlich auf dem Chip selbst mit einer Ausdehnung des Spulenleitbahnquerschnitts parallel zur Chipnormalen größer als 5 µm monolithisch aufgebracht sind.

2. Datenträger für Identifikationssysteme nach Anspruch 1., dadurch gekennzeichnet, daß zumindest die niederohmigen Spulenbereiche aus einem anderen Material niedrigeren spezifischen widerstands als dem der Leitungsbahnbereiche (1e) gebildet sind.

3. Datenträger für Identifikationssysteme nach einem der vorhergehenden Ansprüche, dadurch gekennzeichnet, daß zumindest diejenige Teilspule, die die niederohmigste ist im Leitungsbahnquerschnitt derart gestaltet ist, daß sie einen Flächenwiderstand ≤5 mΩ/□ aufweist.

4. Datenträger für Identifikationssysteme nach einem der vorhergehenden Ansprüche, dadurch gekennzeichnet, daß die niederohmige Spule im wesentlichen aus Gold gefertigt ist.

5. Datenträger für Identifikationssysteme nach einem der vorhergehenden Ansprüche, dadurch gekennzeichnet, daß wenigstens die niederohmige Spule nach dem Verfahren der Bump-Technologie gefertigt ist.

## Claims

1. Data carrier chip for identification systems comprising at least one integrated circuit (1) and a coil arrangement (2) connected thereto, being split, if required, into a plurality of coil ranges, said coil arrangement (2) being substantially located above the active semiconductor areas of the data carrier chip on sections of the uppermost conductive path structures (1e), in which at least the low-ohmic ranges of the coil arrangement are exclusively and monolithically provided on the chip itself with a cross-sectional thickness of the coil conductive path in a direction parallel to the chip normal greater than 5 µm.

2. Data carrier chip for identification systems as claimed in claim 1, wherein at least the material of the low-ohmic coil ranges is selected from a different material of lower specific resistance than that of the conductive path structures (1e).

3. Data carrier chip for identification systems as claimed in one of the preceding claims, wherein at least the conductive path cross-section of that coil range having the lowest ohmic value is embodied such to exhibit an area resistance of ≤ 5 mΩ/□.

4. Data carrier chip for identification systems as claimed in one of the preceding claims, wherein the low-ohmic coil is substantially made of gold.

5. Data carrier chip for identification systems as claimed in one of the preceding claims, wherein at least the low-ohmic coil is manufactured by the bump technology process.

## Revendications

1. Supports d'informations pour systèmes d'identification qui contiennent un ou plusieurs montages intégrés et un arrangement de bobines liés avec le montage et, le cas échéant, partagé dans plusieurs sections. Pour l'essentiel, ces montages sont placés directement au dessus des sections actives du semi-conducteur sur la puce sur sections des structures des pistes conductives les plus élevées. Au moins les sections de basse impédance de l'arrangement de bobines ne sont placées que sur la puce même de façon monolithe avec une dimension de la coupe transversale de la piste conductive de la bobine de plus de 5 µm parallèlement à la normale de la puce.

2. Supports d'information pour systèmes d'identification conforme à la spécification no. 1 qui sont marqués par le fait qu'au moins les sections de basse impédance sont construites d'un autre matériel que les sections des pistes conductives (no. 1e) avec une résistivité spécifique moins élevé que celui des sections des pistes conductives.

3. Supports d'information pour systèmes d'identification conforme à une des spécifications mentionnées qui sont marqués par le fait qu'au moins la section de bobine avec la plus basse impédance et dont la coupe transversale de la piste conductive est construite de façon qu'elle montre une résistance de surface ≤ 5 mΩ/□.

4. Supports d'information pour systèmes d'identification conforme à une des spécifications mentionnées qui sont marqués par le fait que la bobine de basse impédance est fabriquée essentiellement en or.

5. Supports d'information pour systèmes d'identification conforme à une des spécifications mentionnées qui sont marqués par le fait qu'au moins la bobine de basse impédance est fabriquée d'après la méthode de la technologie Bump.
